# FASCICULE DE BREVET EUROPEEN

(11) **EP 2 517 319 B1**
(45) Date de publication et mention de la délivrance du brevet: **10.04.2019**
(21) Numéro de dépôt: 10790787.5
(22) Date de dépôt: 15.12.2010
(51) Int. Cl.: H01S 3/102, H01S 3/115, H01S 3/117, H01S 3/121, H01S 3/131

(54) **LASER À IMPULSIONS DE PÉRIODE VARIABLE ET À ÉNERGIE STABILISÉE**
LASER MIT PULSEMISSIONEN VON VERÄNDERLICHER DAUER UND STABILISIERTER ENERGIE
LASER EMITTING PULSES OF VARIABLE PERIOD AND STABILIZED ENERGY

(30) Priorité: 23.12.2009 FR 0906293
(43) Date de publication de la demande: 31.10.2012
(73) Titulaire: THALES, 92400 Courbevoie (FR)
(72) Inventeur: ROUSSEAU, Pascal, 78220 Viroflay (FR)
(74) Mandataire: Henriot, Marie-Pierre
(86) Numéro de dépôt international: PCT/EP2010/069701
(87) Numéro de publication internationale: WO 2011/076624

(56) Documents cités:
- WO-A1-2008/086989
- WO-A1-2009/089619
- US-A1- 2008 170 597

## Description

Le domaine de l'invention est celui des lasers impulsionnels dont la fréquence de répétition des impulsions est variable, leur énergie étant stabilisée, et qui sont pompés par une source continue.

Il existe actuellement des lasers impulsionnels dont les impulsions utilisent des commutateurs intra-cavités (désignés Q-switch en anglais), Q représentant le facteur de qualité de la cavité résonnante. Ils sont appelés lasers déclenchés.

Dans un laser déclenché il y a deux phases. La phase de pompage permet le stockage de l'énergie de pompage dans le matériau laser. Le commutateur de cavité fermé empêche la résonance. Pour générer une impulsion le commutateur est ouvert. La résonance est possible. La lumière présente dans les modes de la cavité est amplifiée par le matériau laser. Une impulsion intense se forme. L'énergie de cette impulsion est proportionnelle à l'énergie stockée dans le matériau laser durant le pompage. Pour un bon contrôle de l'énergie et du profil temporel de l'impulsion, la commutation doit être rapide. Classiquement seule l'ouverture très rapide du commutateur-Q est contrôlée. La fermeture contrôlée peu de temps après l'ouverture, peut permettre de réduire l'énergie par impulsion.

Chaque transition de matériau laser a une durée de vie. C'est le temps, hors pompage, pour que la moitié de la population en état excité de la transition laser ait disparu. C'est aussi le temps pour atteindre la moitié de la population en état excité pour une durée de pompage très longue en l'absence de tout effet parasite pouvant réduire l'efficacité de pompage.

Si la période entre les impulsions est grande devant la durée de vie de l'état excité de la transition laser utilisée, l'énergie par impulsion est maximale. Toute augmentation de la période ne modifie pas l'énergie par impulsion. Pour un laser donné, cette énergie par impulsion est contrôlée par la puissance du pompage et la durée de vie de l'état excité.

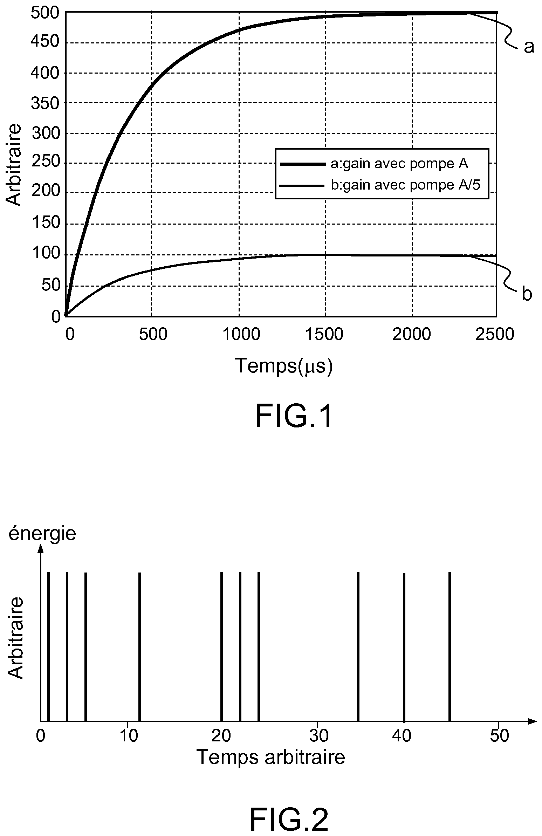

Ceci est illustré par la figure 1 qui montre deux exemples de courbes de gain en fonction du temps, pour une durée de vie de l'état excité de 250 µs, ce gain exprimé en unités arbitraires étant accumulé dans le milieu amplificateur d'un laser à commutateur-Q, par un pompage continu A pour la courbe « a » et A/5 pour la courbe « b ». Pour des périodes supérieures à 830 µs, le gain disponible varie de moins de 10% ; l'énergie par impulsion varie dans des proportions similaires.

A l'autre extrémité de la courbe, lorsque la période est réduite, l'énergie par impulsion n'est plus contrôlée par la durée de vie de l'état excité. Le laser fonctionne à puissance moyenne. A période fixe, l'énergie par impulsion est proportionnelle à la période séparant chaque impulsion. Tout changement de période modifie l'énergie par impulsion ; celle-ci dépend de l'énergie de l'impulsion précédente et de la période les séparant. Dans les exemples de la figure 1, c'est le domaine des périodes inférieures à 250 µs.

Finalement, l'énergie par impulsion variant dans des proportions similaires au gain, on obtient alors pour des périodes d'impulsions variant entre 150 et 1000 µs, des énergies par impulsions très disparates puisque variant entre 150 et 500 unités arbitraires.

En outre les impulsions doivent satisfaire une énergie minimale pour la performance, mais ne doivent pas dépasser un seuil donné d'énergie pour éviter la dégradation irréversible du laser.

Pour obtenir des impulsions semblables à cadence variable, plusieurs méthodes sont utilisées.

La première solution effectue un tri en sortie du laser déclenché. Le laser a une période de répétition fixe dite période de base. Les impulsions en sortie sont soit rejetées soit transmises. Les périodes obtenues sont donc limitées à des multiples de la période de base ; la position de début de chaque train d'impulsions est imposée.

Une autre solution consiste à moduler la puissance de la source de pompage continue en fonction du moment souhaité pour l'émission de chaque impulsion. La modulation de la puissance de pompage compense l'effet d'augmentation de l'énergie de l'impulsion avec la durée de pompage ; mais cette modulation n'est possible que dans la mesure où la constante de temps de réaction de la source de pompage le permet, notamment si la source de pompage est un laser. Il n'est pas toujours possible de moduler la pompe assez rapidement, ou bien il n'est pas possible de prédire suffisamment à l'avance quand l'impulsion suivante devra être émise. La puissance variable du pompage modifie le point d'équilibre thermique de la cavité résonante lorsque la cadence change, ce qui génère une instabilité thermique au sein du laser déclenché.

Une autre solution passe par le contrôle du moment et de la durée de l'ouverture du commutateur intra-cavité. La durée d'ouverture dépend de l'énergie de la précédente impulsion et du temps écoulé. La durée d'ouverture est donc pilotée en fonction du temps écoulé depuis l'impulsion précédente et de son énergie. Les durées de commutation d'ouverture et de fermeture doivent aussi être maîtrisées. Une électronique de commande sophistiquée est nécessaire pour ouvrir et fermer le commutateur-Q précisément. Ce double pilotage est inhabituel et complexe et sa mise au point est difficile. Pour des périodes changeant à chaque impulsion, les lois de commande sont difficiles à mettre au point et des réajustements sont nécessaires au cours de la vie du laser. Avec la complexité, la sûreté de fonctionnement et la fiabilité sont moins bonnes.

Le but de l'invention est d'obtenir un laser impulsionnel à pompage continu, l'émission des impulsions étant à période variable et à énergie par impulsion stable comme illustré figure 2.

L'invention est basée sur l'ajout d'un injecteur dont le faisceau émis de même longueur d'onde que celle du laser, est injecté dans le matériau laser pour être amplifié. Cette amplification qui consomme du gain a pour effet de simuler une réduction de la constante de temps du matériau laser ; l'ajustement de la puissance de l'injecteur modifie la constante de temps apparente du matériau laser. La constante de temps apparente est celle pour l'obtention d'une population moitié de celle qui serait obtenue pour une durée de pompage longue (typiquement de l'ordre de 3 à 4 fois supérieure à la constante de temps) et une puissance d'injecteur constante.

Plus précisément l'invention a pour objet un dispositif laser apte à émettre des impulsions de période variable et dont l'énergie est stabilisée qui comprend :
- une cavité résonante comprenant
- un milieu amplificateur présentant un gain stabilisé G et apte à émettre des impulsions laser à une longueur d'onde λ, et
- un commutateur-Q,
- et une source de pompage continu du milieu amplificateur.

Il est principalement caractérisé en ce qu'il comprend en outre un injecteur placé en dehors de la cavité résonante, apte à émettre dans le matériau amplificateur un faisceau de longueur d'onde λ pendant la durée du pompage, et qui comprend des moyens de réglage de la puissance de ce faisceau pour réduire le gain du milieu amplificateur à G/k, k étant un nombre réel supérieur à 1,7.

Grâce à l'injecteur et avec un pompage continu stable, chaque impulsion peut être temporellement précisément commandée avec une énergie par impulsion stabilisée.
La charge thermique du laser impulsionnel est stable et indépendante des demandes d'impulsions, car le pompage est continu à niveau constant.
Le commutateur-Q a peu de contrainte.

De préférence, l'injecteur partage le même moyen de pompage que le laser lui-même. Ainsi l'injecteur est actif dès le début du pompage du laser assurant la stabilisation en énergie par impulsion sans contrôle ou commande externe.
Selon une variante, l'injecteur est disposé en dehors de l'axe source de pompage-milieu amplificateur.
L'injecteur peut être une diode laser ou un laser microchip ou une diode électro-luminescente.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement deux exemples de courbes de gain exprimées en unités arbitraires en fonction du temps, pour un pompage continu de puissance A pour la courbe « a » et A/5 pour la courbe « b »,
la figure 2 illustre schématiquement des impulsions de période variable et à énergie stable,
la figure 3 représente schématiquement un exemple de dispositif laser impulsionnel selon l'invention,
la figure 4 représente schématiquement les courbes de gain obtenues avec un dispositif laser selon l'invention dans des conditions équivalentes à celles de l'exemple 1 de la figure 1.

D'une figure à l'autre, les mêmes éléments sont repérés par les mêmes références.

Les courbes de la figure 1 s'expliquent de la manière suivante :
- la puissance du pompage est en compétition avec la fluorescence du matériau laser (milieu amplificateur). Le pompage augmente la population d'états excités du matériau laser. Le gain augmente avec la proportion de population en état excité. La fluorescence est proportionnelle au gain. La fluorescence est une émission incohérente de même longueur d'onde que le laser. La fluorescence consomme le gain. Au début du pompage, il n'y a pas d'état excité en nombre significatif, il n'y a pas de gain, il n'y a pas de fluorescence. Avec le pompage, le gain augmente. Tant qu'il est faible la fluorescence consomme peu de gain. Avec l'augmentation du gain, la fluorescence limite cette augmentation. Finalement l'apport de gain par le pompage est entièrement consommé par la fluorescence. Le niveau de gain est maximal. Ce niveau est fonction de la puissance de pompage.
- remarque : pour de fortes puissances de pompage la fluorescence n'est pas la première caractéristique limitant le gain. Ce processus d'augmentation du gain peut aussi être limité par la quantité totale d'états excités pouvant être créés dans le matériau laser.
- la constante de temps est définie hors pompage, elle est la durée pour que la moitié des états excités disparaissent par fluorescence. C'est une caractéristique intrinsèque du matériau laser,
- loin en deçà de la constante de temps, l'énergie par impulsion est proportionnelle à la durée de pompage,
- loin au delà de la constante de temps, l'énergie par impulsion est fixe,
- l'énergie par impulsion est proportionnelle à la puissance de pompage (la courbe « a » est « homothétique » de la courbe « b »).

Le procédé selon l'invention a pour effet de réduire la constante de temps équivalente du matériau laser. Ceci est obtenu en injectant dans le matériau laser un faisceau de même longueur d'onde λ que celle du faisceau émis par le matériau laser. Dans ce matériau, le faisceau émis par l'injecteur va être d'autant plus amplifié que le gain est important. Le pompage étant continu, il y a compétition entre le gain apporté par le pompage et la consommation de ce gain par l'amplification de l'injection. Cette injection va limiter le gain G disponible dans la cavité au-delà d'un certain niveau. Pour un niveau de pompage donné, cela équivaut à une réduction de la durée de vie de l'état excité du matériau laser. La durée de vie équivalente est ajustée par le niveau de puissance de l'injection. L'injection amplifiée doit être rejetée par le commutateur-Q pour éviter le début de la construction d'une impulsion. Le faisceau est émis par l'injecteur lorsque le commutateur-Q est en position fermée. Le rôle de l'injecteur est effectif pendant la durée du pompage ; il peut être émis ou non lorsque le commutateur-Q est en position ouverte.

L'énergie stockée dans le matériau laser est limitée par cette consommation de gain de l'injecteur. Cette limitation du gain empêche toute création d'impulsions trop énergétiques, indépendamment de la durée écoulée avant l'impulsion.

Ce faisceau injecté est amplifié par le milieu laser dont le gain et donc l'énergie sont alors limités. Cet injecteur assure ainsi une protection statique contre des impulsions trop énergétiques.

Habituellement on utilise un injecteur pour favoriser la qualité de l'émission du laser : pureté et précision spectrale, qualité du mode transverse ou précision temporelle d'impulsion. Pour cela l'injecteur émet dans le mode et la direction d'émission du laser. Une puissance très faible de l'injecteur dans le laser est suffisante. Le faisceau émis par l'injecteur doit être en résonance dans la cavité laser. L'injecteur émet quand le commutateur est ouvert pour favoriser l'émission recherchée. Un injecteur peut aussi être utilisé dans un laser continu. Des exemples de lasers à commutateur-Q, à stabilisation de fréquence et qui comportent un injecteur en dehors de la cavité résonante, sont décrits dans les documents WO 2008/086989 et US 2008/0170597. Dans ces lasers, le gain du milieu amplificateur est réduit par l'injection dans la cavité de la lumière émise par l'injecteur.
L'utilisation selon l'invention est donc à contre-emploi par rapport aux utilisations habituelles.

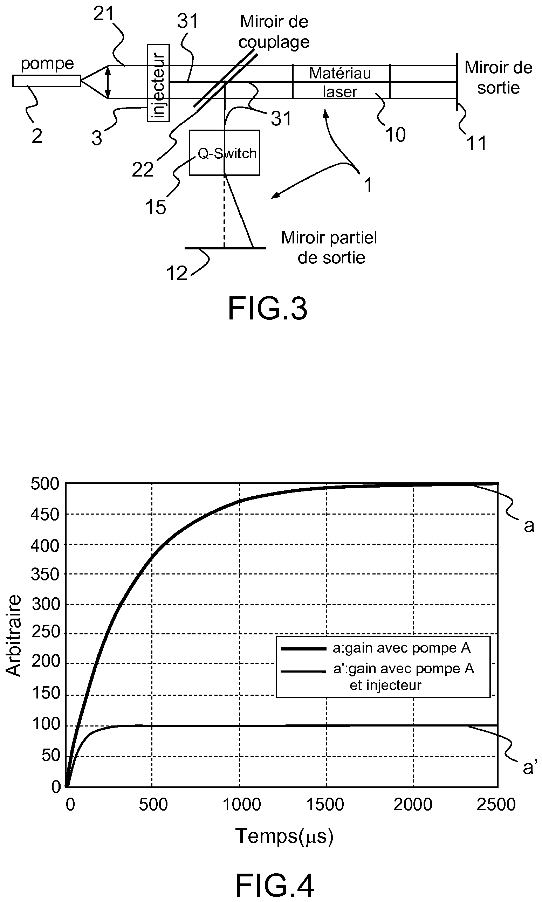

On montre figure 3 un exemple de laser déclenché selon l'invention. Il comprend une cavité résonante 1 qui comporte un premier miroir 11 de sortie et un deuxième miroir 12 ; elle est représentée coudée en L mais pourrait tout aussi bien être linéaire ou en anneau.

Elle comprend un matériau laser 10 apte à émettre un faisceau de longueur d'onde λ ; on peut citer à titre d'exemple d'un tel matériau, le Nd :YAG avec λ= 1,064 µm ou Ho :YAG avec λ= 2,1 µm.

La cavité 1 comprend également un commutateur-Q 15 piloté permettant l'émission d'impulsions à la demande. Ce commutateur-Q peut être par exemple un commutateur acousto-optique qui dévie le faisceau d'un trajet de cavité résonante (ou accordée) vers un trajet de cavité non résonante (ou désaccordée) où le deuxième miroir 12 joue alors un rôle de miroir partiel de sortie, comme représenté sur la figure, et vice-versa. Lorsque la cavité est désaccordée, la puissance de pompage est stockée dans le matériau laser. Lorsque la cavité est accordée une impulsion peut se former si le gain est suffisant. Un commutateur électro-optique, faisant tourner la polarisation de la lumière à la demande, peut aussi être utilisé dans une architecture sélectionnant la polarisation de la lumière ; on ajoute alors un polariseur dans la cavité résonante.

La cavité 1 est couplée à une source de pompage continu 2 par exemple par un miroir de couplage 22, transparent pour la longueur d'onde de la source de pompage et réfléchissant pour le faisceau émis par le matériau laser 10, mais qui reste faiblement transparent à la longueur d'onde du laser.

Un émetteur 3 d'un faisceau 31 de même longueur d'onde λ est couplé au matériau laser 10 de manière à injecter dans ce matériau ledit faisceau. Cet émetteur 3 peut être plus généralement toute source de lumière émettant en continu et dont le spectre d'émission recouvre la bande spectrale d'émission dans lequel le laser déclenché doit émettre. Le faisceau 31 est en émission continue pendant toute la durée du pompage du laser. Cet émetteur est aussi désigné injecteur. Il est situé en dehors de la cavité résonante 1, pour ne pas être perturbé par les impulsions émises par la cavité résonante 1.

Cet injecteur 3 est par exemple passif ; il est alors situé sur le trajet du faisceau de pompage 21 pour être piloté par ce faisceau de pompage. L'injecteur utilise ainsi une fraction du faisceau de pompage 21. Il s'agit alors d'une protection passive. L'ensemble est statique sans contrôle actif pour assurer la protection. L'émission de l'injecteur n'est pas nécessairement dans un mode résonnant de la cavité laser.

Il peut être situé sur le trajet du faisceau de pompage 21 avant la cavité résonante 1 comme représenté sur la figure : l'injection se fait par le même trajet que celui du faisceau de pompage. Selon une variante, le faisceau de pompage est divisé en deux, une partie étant directement dirigée vers le matériau laser 10, l'autre étant dirigée vers l'injecteur 3 situé en dehors du trajet pompe-matériau.

Dans le cas d'un injecteur passif, la puissance du faisceau émis est fixée à la conception.

Selon un autre mode d'exploitation, l'injecteur 3 est actif et comprend un moyen de pilotage propre. Il peut être placé en tout lieu permettant un éclairement réparti du matériau laser, pour avoir un effet homogène, notamment en dehors du faisceau de pompage 21.

La puissance du faisceau 31 émis par l'injecteur est réglée en tenant compte de la transmission du miroir de couplage, de manière à réduire le gain G du matériau laser d'un facteur k, k étant un nombre réel supérieur à 1,7.

Cet injecteur peut être une diode électro-luminescente, ou être lui-même un laser tel qu'une diode laser ou un laser micro-chip composé du même matériau que le laser lui-même dont les faces parallèles sont réfléchissante d'un coté et partiellement réfléchissante du coté de la sortie à la longueur d'onde du laser. Il n'est pas nécessaire que la longueur d'onde émise soit résonnante dans la cavité du laser.

Dans le cas par exemple d'une diode électroluminescente ou une diode laser, le moyen de pilotage et les moyens de réglage de la puissance du faisceau émis sont le courant électrique.

En plus des avantages déjà évoqués, on peut aussi noter que comme il n'y a plus à tenir compte de la période des impulsions et de l'énergie de l'impulsion précédente, la commande du commutateur-Q est simple.

De plus, la stabilité thermique est conservée même en l'absence d'émission d'impulsions car le pompage continu peut être maintenu sans risque.

On a représenté figure 4 deux exemples de courbes de gain obtenus avec un pompage continu A, l'une « a » avec un laser déclenché tel que décrit figure 1 avec un gain stabilisé G, l'autre « a' » avec un laser déclenché muni d'un injecteur selon l'invention réglé à un niveau de puissance permettant un niveau de gain stabilisé de G/5 (k=5).

L'énergie par impulsion variant dans des proportions similaires au gain, l'énergie par impulsion est stable à mieux que 10% (de 90 à 100 unités arbitraires) pour toute période supérieure à 150 µs. Alors que sans l'injecteur l'énergie par impulsion varierait de 300 % (de 170 à 500).

On a donc obtenu des émissions d'impulsions à période variable et à énergie par impulsion contrôlée.

## Revendications

1. Procédé d'utilisation d'un dispositif laser apte à émettre des impulsions de période variable, qui comprend :
- une cavité résonante (1) comprenant un milieu amplificateur (10) présentant un gain stabilisé G et apte à émettre des impulsions laser à une longueur d'onde λ, et un commutateur-Q (15),
- une source de pompage continu (2) du milieu amplificateur,
- un injecteur (3) placé en dehors de la cavité résonante (1), apte à émettre dans le matériau amplificateur (10) un faisceau de longueur d'onde λ,
- des moyens de réglage de la puissance du faisceau injecté,
**caractérisé en ce qu'**il comprend une étape d'émission par l'injecteur d'un faisceau pendant la durée du pompage et lorsque le commutateur-Q est en position fermée, et **en ce que** la puissance du faisceau injecté est réglée pour réduire le gain du milieu amplificateur à G/k, k est un nombre réel supérieur à 1,7.

2. Procédé d'utilisation d'un dispositif laser selon la revendication précédente, **caractérisé en ce que** l'injecteur est piloté par la source de pompage.

3. Dispositif laser apte à émettre des impulsions de période variable, qui comprend :
- une cavité résonante (1) comprenant un milieu amplificateur (10) présentant un gain stabilisé G et apte à émettre des impulsions laser à une longueur d'onde λ, et un commutateur-Q (15),
- une source de pompage continu (2) du milieu amplificateur,
- un injecteur (3) placé en dehors de la cavité résonante (1), apte à émettre dans le matériau amplificateur (10) un faisceau injecté de longueur d'onde λ,
**caractérisé en ce qu'**il comprend des moyens de réglage de la puissance du faisceau injecté configurés pour réduire le gain du milieu amplificateur à G/k, k étant un nombre réel supérieur à 1,7.

4. Dispositif laser selon la revendication précédente, **caractérisé en ce que** l'injecteur (3) est disposé en dehors de l'axe entre la source de pompage (2) et le milieu amplificateur (10).

5. Dispositif laser selon l'une des revendications 3 ou 4, **caractérisé en ce que** l'injecteur (3) est une diode laser ou un laser microchip ou une diode électro-luminescente

## Patentansprüche

1. Verfahren zum Benutzen einer Laservorrichtung, die Impulse variabler Periode aussenden kann, die Folgendes umfasst:
- einen Resonanzhohlraum (1), der ein Verstärkermedium (10), das eine stabilisierte Verstärkung G aufweist und Laserimpulse mit einer Wellenlänge λ aussenden kann, und einen Q-Schalter (15) umfasst,
- eine kontinuierliche Pumpquelle (2) des Verstärkermediums,
- einen Injektor (3), der außerhalb des Resonanzhohlraums (1) platziert ist und in das Verstärkermaterial (10) einen Strahl mit der Wellenlänge λ aussenden kann,
- Mittel zum Regeln der Leistung des injizierten Strahls,
**dadurch gekennzeichnet, dass** es einen Schritt des Emittierens eines Strahls durch den Injektor während der Pumpdauer und wenn der Q-Schalter in der geschlossenen Position ist, umfasst, und dadurch, dass die Leistung des injizierten Strahls zum Reduzieren der Verstärkung des Verstärkermediums auf G/k geregelt wird, wobei k eine reale Zahl größer als 1,7 ist.

2. Verfahren zum Nutzen einer Laservorrichtung nach dem vorherigen Anspruch, **dadurch gekennzeichnet, dass** der Injektor durch die Pumpquelle gesteuert wird.

3. Laservorrichtung, die Impulse mit variabler Periode aussenden kann, die Folgendes umfasst:
- einen Resonanzhohlraum (1), der ein Verstärkermedium (10), das eine stabilisierte Verstärkung G aufweist und Laserimpulse mit einer Wellenlänge λ aussenden kann, und einen Q-Schalter (15) umfasst,
- eine kontinuierliche Pumpquelle (2) des Verstärkermediums,
- einen Injektor (3), der außerhalb des Resonanzhohlraums (1) platziert ist und in das Verstärkermaterial (10) einen injizierten Strahl mit der Wellenlänge λ aussenden kann,
**dadurch gekennzeichnet, dass** sie Mittel zum Regeln der Leistung des injizierten Strahls umfasst, konfiguriert zum Reduzieren der Verstärkung des Verstärkermediums auf G/k, wobei k eine reale Zahl größer als 1,7 ist.

4. Laservorrichtung nach dem vorherigen Anspruch, **dadurch gekennzeichnet, dass** der Injektor (3) außerhalb der Achse zwischen der Pumpquelle (2) und dem Verstärkermedium (10) angeordnet ist.

5. Laservorrichtung nach Anspruch 3 oder 4, **dadurch gekennzeichnet, dass** der Injektor (3) eine Laserdiode oder ein Mikrochip-Laser oder eine Leuchtdiode ist.

## Claims

1. A method for using a laser device suitable for emitting variable-period pulses, which includes:
- a resonant cavity (1) including an amplifying medium (10) presenting a stabilized gain G and suitable for emitting laser pulses at a wavelength λ, and a Q-switch (15),
- a source of continuous pumping (2) of the amplifying medium,
- an injector (3) positioned outside the resonant cavity (1), suitable for emitting a beam of wavelength λ into the amplifying material (10),
- means for adjusting the power of the injected beam,
**characterized in that** it includes a step of emission by the injector of a beam for the duration of the pumping and when the Q-switch is in the closed position, and **in that** the power of the injected beam is adjusted to reduce the gain of the amplifying medium to G/k, where k is a real number greater than 1.7.

2. The method for using a laser device as claimed in the preceding claim, **characterized in that** the injector is controlled by the pumping source.

3. A laser device suitable for emitting variable-period pulses, which includes:
- a resonant cavity (1) including an amplifying medium (10) presenting a stabilized gain G and suitable for emitting laser pulses at a wavelength λ, and a Q-switch (15),
- a source of continuous pumping (2) of the amplifying medium,
- an injector (3) positioned outside the resonant cavity (1), suitable for emitting a beam of wavelength λ into the amplifying material (10),
**characterized in that** it includes means for adjusting the power of the injected beam configured to reduce the gain of the amplifying medium to G/k, where k is a real number greater than 1.7.

4. The laser device as claimed in the preceding claim, **characterized in that** the injector (3) is disposed outside the axis between the pumping source (2) and the amplifying medium (10).

5. The laser device as claimed in either of claims 3 and 4, **characterized in that** the injector (3) is a laser diode or microchip laser or an electroluminescent diode.
